# EUROPEAN PATENT SPECIFICATION

(11) **EP 1 389 850 B1**
(45) Date of publication and mention of the grant of the patent: **20.10.2010**
(21) Application number: 02018510.4
(22) Date of filing: 16.08.2002
(51) Int. Cl.: H04L 12/24

(54) **Generic SNMP proxy**
Allgemeiner SNMP Proxy
Proxy SNMP générique

(43) Date of publication of application: 18.02.2004
(73) Proprietor: Software AG, D-64297 Darmstadt (DE)
(72) Inventor: Bettendorf, Christian-Victor, 86343 Königsbrunn (DE)
(74) Representative: Heselberger, Johannes

(56) References cited:
- WO-A-00/76228
- US-A- 5 870 749
- US-A1- 2002 007 422
- KOERNER E: "Design of a proxy for managing CMIP agents via SNMP" COMPUTER COMMUNICATIONS, ELSEVIER SCIENCE PUBLISHERS BV, AMSTERDAM, NL, vol. 20, no. 5, 1 July 1997 (1997-07-01), pages 349-360, XP004126690 ISSN: 0140-3664
- MAZUMDAR S ET AL: "DESIGN OF PROTOCOL INDEPENDENT MANAGEMENT AGENT TO SUPPORT SNMP AND CMIP QUERIES" INTEGRATED NETWORK MANAGEMENT, III PROCEEDINGS 3RD INTERNATIONAL SYMPOSIUM, 18-23 APRIL 1993, AMSTERDAM, NL, vol. C12, 1993, pages 377-388, XP000749257

## Description

The following invention deals with a method and a unit enabling a communication between members of a system.

An example for such a communication is the communication between a so-called manager and a managed device. The task of the manager is to manage the managed device. For this task, the manager needs access to internal data of the managed device. Examples for managed devices are a host, a gateway, a server or an applicant. The managed device and the manager are connected via a suitable connection, for example a network.

In order to provide the manager access to the internal information vendors of managed devices offer a so-called specific agent for the managed device. The managed device is adapted to communicate with the specific agent and to provide internal information.

If such a specific agent does not exist, the user of the managed device has to create a specific agent on his own. This is a very difficult task since modules have to be developed. For this development knowledge about the internal structure of the managed device is necessary and the structure of the managed device has to be changed, for example in the source code of the managed device.

The US 2002/0007422 A1 discloses an equipment controller as well as an equipment server which uses SNMP to communicate with various equipment devices. The equipment controller is adapted to translate the native SNMP protocol into other protocols as they are used by various applications.

Therefore, the problem underlying the present invention is to provide a method, a unit, a computer system and a system for enabling communication between a manager and an arbitrary managed device, without changing the managed device.

This problem is solved by a method for providing a manager access to data of an arbitrary managed device by using at least one utility of the managed device, wherein the method comprises the steps of sending a request to a utility of the managed device, receiving a response from the managed device, and mapping information received with the response into a format applicable for the manager.

The inventive method enables for the first time the communication between an arbitrary managed device and a manager. The method can be realized by a unit called proxy. This unit can be realized in software or in hardware. In a preferred embodiment the proxy is interposed between the manager and the managed device.

In order to enable the communication between the manager and an arbitrary managed device the manager contacts at least one utility of the managed device.

The term managed device is used in the following for any device which can be managed by a manager in accordance with the inventive method. The managed device is a hardware or software unit with a specific task or a group of tasks. An example for a managed device is a data base. The managed device comprises at least one utility. A utility is each kind of interface, communication protocol or module which enables the interaction between the managed device and a third party. A utility is used for example to communicate with the managed device in order to query data or a state, to activate or deactivate features, to perform specific actions or to change the configuration.

The utilities can communicate with a third party via different levels. One example for a level is a graphical interface. Another example is a command-line. The TCP/IP protocol can also be an example for a level of a utility.

The managed device is connected to a data network. This network can be realized for example by cable or radio communication. The manager is also connected to this data network. The manager is any software or hardware which monitors or controls and therefore manages the managed device.

According to the present invention a manager is enabled to get access to an arbitrary managed device. This access is used by the manager to communicate with the managed device.

Examples for the communication between a manager and a managed device are the transmission of data from the managed device to the manager (get), the transmission of a status message about a status in the managed device to the manager (trap) and the transmission of data from the manager to the managed device (set).

The communication between the manager an the managed device comprises at least three steps. In one step a request is sent to at least one utility of the managed device. In a preferred embodiment of the present invention the request includes an order to get data of the managed device. The request is adapted to the functionality of the utility and to the managed device.

According to preferred embodiment the request is defined in collection rules. These collection rules define the act of controlling the managed device by at least one utility. A collection rule comprises, for example, a description of the driver which is necessary to contact the desired utility. In addition, the collection rule may comprise a description of the desired utility of the managed device and dependencies to other collection rules.

According to the present invention, data is any kind of information about, from or of the managed device. Examples for different kinds of data are the status of the managed device, parameters set in the managed device and statistical information about the operation of the managed device. The term data is used as a specific group of information.

In response to the request the managed device answers with the second step, the response. This answer can come from the managed device or the utility, which belongs to the managed device. This response includes in a preferred embodiment the requested data. But it is also possible that the response includes, for example, an error message or administrative information.

In a further step, information received with the response is mapped into a format which is applicable for the manager. This information relates to the response. It can be, for example, the complete response, parts of the response or information obtained together with the response.

According to a preferred embodiment of the invention, the data received with the response is handled in different steps. In a first step according to the preferred embodiment the response or parts of the response are translated into an intermediate format. In the description of the present invention the term format is used for a group of rules enabling a communication. Other terms which can be used for this group of rules are, for example, language, protocol and definitions. This format is in a preferred embodiment a XML-format.

The translation of the response or parts of the response is preferably defined in translation rules. The translation rules define, for example, the structure of the XML-format. The translation rules comprise, for example, a link to the relevant collection rule, a definition of the intermediate format and a XML document building procedure.

If a XML-format is used as intermediate format, the data may be organized in conceptual tables, each table can include one or more rows, each row have one or more columns, all rows have the same number of columns. The XML document building procedure defines how the data provided by the respective collection rule is parsed and fills the XML document row by row, each row column by column. The XML intermediate format may be defined in a document type definition (DTD).

In order to obtain the data in a format applicable by the manager, the data in the intermediate format is mapped into a format applicable for the manager, the so-called manager format. The Simple Network Management Protocol (SNMP) is one example for such a manager format. This protocol defines a method by which the manager can view or change management information for the managed device. An other example for a manager format is RMON.

According to a preferred embodiment, the mapping step is defined in mapping rules. A mapping rule my comprise, for example, an object model building procedure, a method to trigger the update of the object model, other linked mapping rules and the processing of the data to be mapped. This mapping can simply change the format of the data as well as carry out complicated algorithms in order to obtain the necessary value for the manager format.

In a preferred embodiment of the present invention, the information in a format applicable for the manager is stored. Thereby, the manager can collect the information from this point on his own. According to a preferred embodiment of the present invention the information can also be sent to the manager. The information is preferably sent to the manager in response to a request of the manager. But the information can also be sent regularly. In the scope of the present invention information can also be sent to the manager, if a certain criteria is fulfilled. If a certain parameter, for example, falls below a reference value, a corresponding message can be sent to the manager.

The process of getting data from the managed device is preferably controlled by rules as described above. In these rules it may be defined when the corresponding steps are carried out. The steps can, for example, be initiated by a timer or by a certain event. These rules can also define what happens with the collected data on the way to the manager format. The data can, for example, be combined by algorithm, the format of the data can be changed and the data can be evaluated.

The data can be collected directly by one of the above mentioned ways. But the collection of data can also be very difficult. In order to get all necessary and available data, the proxy must react dynamically on the answers of the managed device. An example for a dynamic collection rule is, that it depends on the answer of a collection request whether an other collection request is initiated.

The data which can be obtained from the managed device and the meaning of that data is stored in the manager in a format which is described in a Management Information Base (MIB). Based on this format the manager can interpret the information from the managed device. This format informs the manager also which data can be changed in the managed device.

According to the present invention, the method can also be used to change data in the managed device. According to a preferred embodiment this change is initiated by sending a corresponding request which includes an order to set data within the managed device to a utility. An example for such a request can be the change of a parameter like the time without any operation until the managed device changes its status from operation into idle.

The managed device will respond with a corresponding response. This can be, for example, an approval of setting the requested data. This response will also be mapped in a format applicable for the manager.

The process of changing data within the managed device may be initiated by the manager or by the proxy.

In order to enable a method according to a preferred embodiment of the present invention merely the rules, namely the collection rules, the translation rules and the mapping rules have to be adapted for the employed managed system. There is no need to change anything within the managed system.

The object of the invention is also solved by a proxy for providing a manager access to data of an arbitrary managed device by using at least one utility of the managed device, wherein the proxy comprises a sending unit for sending a request for data to a utility of the managed device, a receiving unit for receiving a response from the managed device, and a mapping unit for mapping the information received with said response into a format applicable for said manager. The proxy is preferably capable and dedicated to process requests which include at least one order to get data from said managed device, to define requests based on collection rules and to process responses which include the requested data.

According to a preferred embodiment of the present invention the proxy is capable and dedicated to process requests which include at least one order to set data within said managed device and to process a response which includes an approval that said data has been set.

Proxy comprises preferably also a translation unit for translating at least parts of said response into an intermediate format and the proxy is preferably capable and dedicated to carry out translations based on translation rules.

The mapping according to the present invention is preferably carried out based on mapping rules. The proxy preferably stores the information in a format applicable for said manager. This information is preferably submitted by the proxy to the manager, preferably in response to a request by said manager.

In a preferred embodiment of the present invention the method according to the invention is carried out in a computer system with a processor, an input/output connection and a storage. This computer system may also be capable to read a storage medium with a software program which reproduces the method of the present invention.

The present invention claims also a storage medium having a program code for carrying out the method according to the present invention and a system comprising at least one manager and at least one managed device wherein said at least one manager and said at least on managed device communicate using a method according to the present invention.

The invention is in the following exemplary described by means of the following drawings, which show:
- Figure 1:: A system with one manager and several managed devices according to the present invention.
- Figure 2:: A proxy enabling the communication between a manager and a managed device according to the present invention.
- Figure 3:: An example for a request according to the present invention.
- Figure 4:: An example for a definition of an intermediate format.
- Figure 5:: An example for mapping rules with data type conversion.
- Figure 6:: An example for rules generating a message for the manager.
- Figure 7:: An example for a combined collecting, translating and mapping rule.
- Figure 8:: An apparatus for carrying out the present invention.
- Figure 9:: A process for generating a SNMP proxy for a specific managed device.

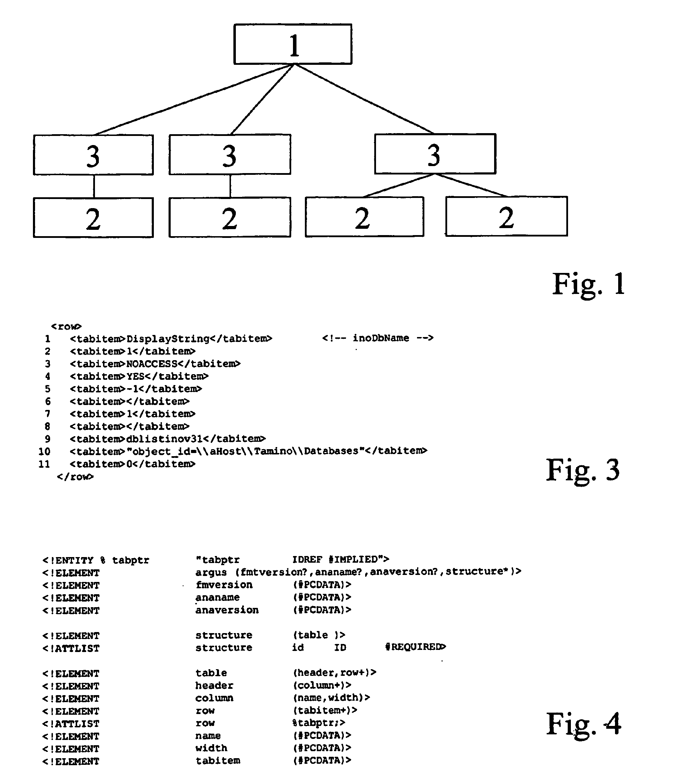

Figure 1 shows a system according to the present invention with one manager 1 and several managed devices 2. In order to enable the communication between the manager 1 and the managed devices 2, generic SNMP proxys 3 according to the present invention are provided. As shown at the left side of Figure 1 a generic SNMP proxy can communicate with one managed device 2 or, as shown on the right side of Figure 1, with two or more managed devices 2.

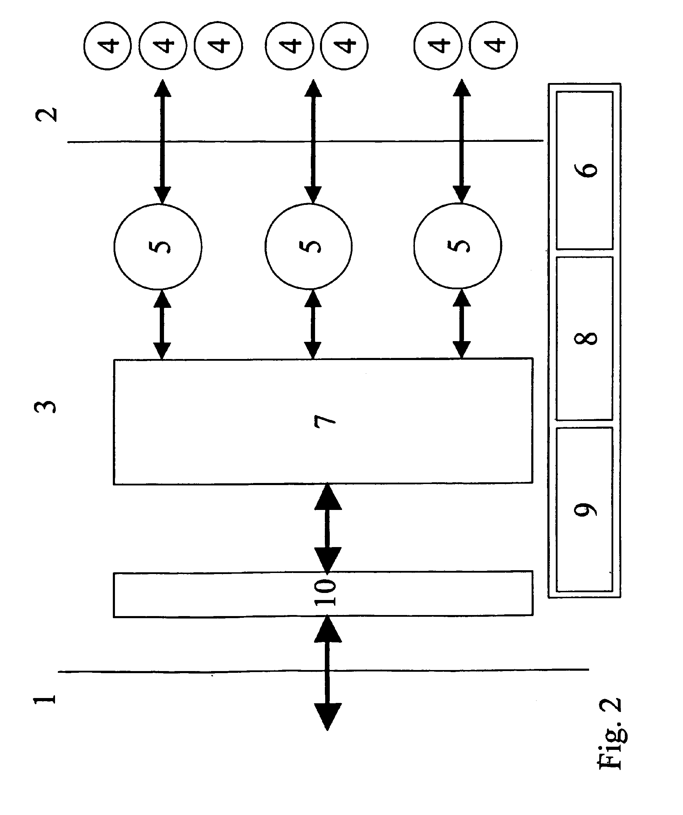

Figure 2 shows an example for a proxy 3 enabling the communication between a manager 1 and a managed device 2 according to the present invention.

In the present example, the managed device 2 is a data base. This data base 2 comprises several utilities 4. Examples are a query utility 4 to query and update the data in the data base, a maintenance utility 4 to load and to backup data and for migration of data to or from other systems and an administration utility 4 to create, configure and check the query state and to start or stop the database.

In order to enable a communication with the managed device 2, the proxy 3 comprises at least one sending unit 5 which is able to communicate with at least one utility 4. This sending unit 5 can also be called driver. In the present example different kinds of drivers 5 are provided. One driver 5 is able to communicate via command-line orders, another driver 5 is able to communicate via graphical interfaces and a third driver 5 is able to communicate via the TCP/IP protocol. These drivers 5 are used depending on the functionality of the utility 4 to be called.

These drivers 5 send the requests to at least one utility 4 of the managed device 2. The request is sent in a format processable by the addressed utility 4. The requests can have different functions. In the following the invention is described with requests for collecting data from the managed device 2.

In order to collect data from the managed device 2 the request has to include all information which is necessary to answer the request. Therefore, the request will comprise, for example, information about the addressed utility 4 and the kind of driver 5 to be used. In addition, the request may comprise the name of the function of the utility 4 which has to be started in order to get the requested data. The request may also comprise parameters for the addressed function in the managed device 2. These parameters may be fixed or may depend on results of previous requests.

In the present example, this information is defined in so-called collection rules 6. These collection rules 6 comprise all necessary information in order to carry out the desired request. The collection rules 6 can be specific for a certain managed device 2 or refer more generally to a kind of managed devices 2.

The data base 2 may comprise, for example, the utility 'dblist' 4 for retrieving the names of the data bases in the system and the utility 'dbcontrol' 4 for controlling a data base. In the present example, both utilities 4 can be contacted by a command-line driver 5. In order to control the status of each data base in the system a collection rule 6 may comprise the demand to use the command-line driver 5 to initiate the dblisf-utility 4 and to buffer the response. In addition, the collection rule 6 may comprise the demand to use the command-line driver 5 to initiate the 'dbcontrof-utility 4 and to submit the necessary parameters. The parameters are, for example, the buffered names of the data bases of the system and the requested action, in this example the order 'state' in order to get information about the state of each data base. The response of the order may comprise the terms running, stopped or standby or a corresponding value, like 0, 1 or 2.

An example for a request to collect all data base names is shown in Figure 3. The definitions in lines 1 to 8 are related to the translation and mapping rules linked with this collection rule and are described later on. Line 9

```
                   <tabitem>dblistinov31>/tabitem<
```

describes the utility to be executed by the collection rule, in this case a command line utility 'dblistinov31'. With this line the utility is started. For command line utilities no further specification is necessary. This may be different for graphical tools, process attach or communication monitoring. Line 10

```
 <tabitem>"object id=\\aHost\\Tamino\\Databases"</tabitem> 
```

defines the parameters to be passed to the utility. With

```
                           <tabitem>0</tabitem>
```

in line 11 the type of data provided as answer by the utility is described. The type of data is in this case '0', that means the utility is a command-line tool providing a line by line report. This information is part of the linked translation rule.

According to the present invention the request can also use context dependant parameters. This can be achieved when line 10 is changed to

```
             <tabitem>"object_id=\\aHost\\Tamino\\Databases\\
             {{nth=0}}"</tabitem>.
```

With this parameter definition the token with the position '0' from the previous request is used to expand on the fly the parameters list for the actual request. If the previous request has produced, for example, the first token 'dbl', the actual request will be defined on the fly by the proxy to use the parameter

```
            "object_id=\\aHost\\Tamino\\Databases\\dbl".
```

The collection rules 6 depend on the entries in a Management Information Base (MIB). Only information which is necessary for the manager 1, is collected based on the collection rules 6. But it is possible, that necessary information can not be collected directly. Such information can be calculated, for example, based on directly collected information.

In response to the request the managed device 2 answers with a corresponding response. The response is received by receiving units 5 which can also be part of the drivers 5 as shown in Figure 2. This response may comprise the requested data or an administrative message, such as an error message. In the present example at least parts of the information in the response is translated into an intermediate format 7. This translation is based in the present example on translation rules 8. In the present example, the intermediate format 7 is a XML-format defined in a DTD. The DTD comprises information about the intermediate format 7 and about the table structure of the intermediate format 7. By using an intermediate format 7 the translation process can be substantially simplified.

Figure 4 shows an example for a DTD for the XML intermediate format. The DTD describes the data structure of the intermediate format, which is organized as table with one or more rows and each row contains one or more columns. The component 'fmtversion' in the DTD describes the version of the internal format, the component 'ananame' describes the utility used by the collection rule and the component 'anaversion' describes the version of this utility. The table structure can be divided into header information and rows. The header comprises columns wherein each column includes a description and additional information. The rows are also divided in columns.

In the present example, the data about the states of the data bases in the systems, which has been collected by the above described collection rule 6, is translated into the intermediate format 7. For each data line of the response, one row in the table of the intermediate format 7 is filled. The response to the above described collection rule 6 may be 'db1 running' in the first row and 'db2 stopped' in the second row, wherein the name of the data base is stored in the first column and the state of the data base in the second column.

According to the present example, the information in the intermediate format 7 will be mapped into a format applicable for the manager. This mapping is carried out in the present example based on mapping rules 9. The mapped information is preferably stored in an internal storage 10 within the proxy 3. The format of the information in the internal storage is also called object model.

In the present example the format applicable for the manager is SNMP. For SNMP the object model is organized in tables and traps, each table is identified using a unique object identifier (oid), each column of the table has a predefined data type, for example string or integer, and is identified using a unique object identifier suffix. The full identifier of a value in a table is in the present example a combination of the table oid, the column oid and the row number.

The mapping rules 9 may also define how often the object model is updated. In addition, in the mapping rules 9 other mapping rules may be defined which may be used with the process in the present mapping rule 9. But the core of the mapping rules 9 in the present example is the description of the mapping process. This description defines how the entries in the intermediate format 7 are extracted and the data type or the data range is converted and assigned in the object model. Theses steps may be based on an algorithm like boolean or arithmetical operations and decisions based on actual and older information.

In the present example, in response to the above described collection and translation steps, a table is defined with the two columns 'name' and 'state'. For each row in the intermediate format 7 a corresponding row in the object model is defined. The table gets a unique object identifier and the format of the entries of the columns is defined. In the present example, the entries in the 'name'-columns has the format string and is stored as read only and the entries in the 'state'-columns has the format integer and is also stored as read only. The entries in this table may be updated every 20 seconds by initiating the corresponding collection 6 and translation rules 8.

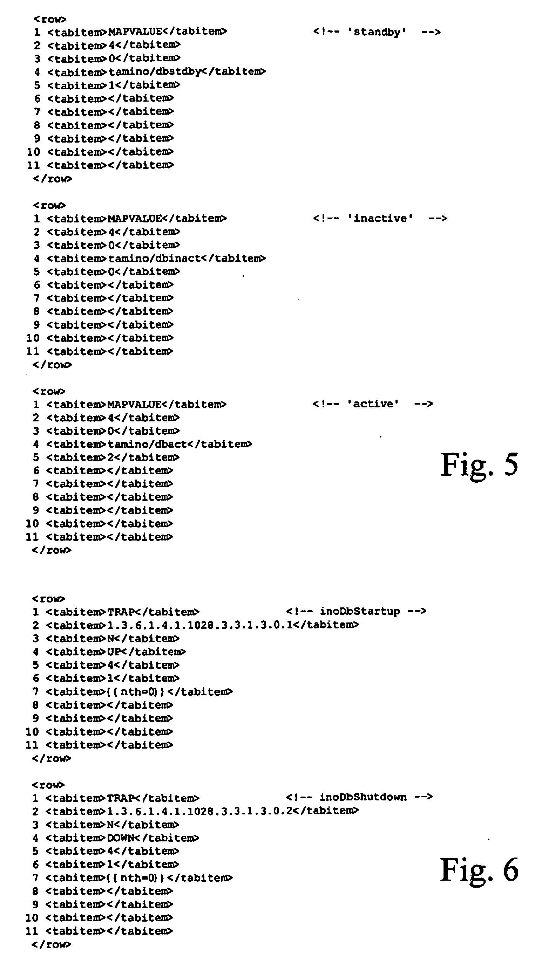

Figure 5 shows an example for mapping rules with data type conversion. Each mapping rule is described in one column, wherein each column is defined by one <row> ... </row> block. In the second line of each block it is defined to which table column the mapping rule belongs. In the present example the table column is defined with the suffix '4'. In the third line it is defined which kind of conversion should be carried out. The number'0' in line

```
                          <tabitem>0</tabitem>
```

defines, that a conversion from the string format into the integer format is carried out. The value to be converted and the result of the conversion is defined in the following lines. According to the first mapping rule the value tamino/dbstdby will be converted to 1, the second mapping rule defines, that the value tamino/dbinact will be converted to 0 and the definition in the third mapping rule results, that the value tamino/dbact is converted into 2.

The information in the manager format obtained by the mapping rules 9 corresponds to the format defined in the Management Information Base (MIB). This information in the manager format can now be transmitted to the manager 1. This transmission can be initiated by the manager 1 or by the proxy 3.

In the present example, the manager 1 collects at regular intervals specific information from the proxy 3. But the proxy 3 can also initiate the transmission of information to the manager 1. This may happen, when a certain critical status has been recognized by the proxy 3. This status may be defined in the rules. In response the proxy 3 may transmit the information on which the critical status has been derived to the manager 1 or a corresponding status message, known in SNMP terms as trap.

Figure 6 shows an example for rules relating to this information process. In the second line the object to be evaluated is defined. The lines three to six define the algorithm used to decide whether a corresponding message is sent to the manager or not. The N in line three defines, that a numerical comparison is carried out. The following line defines, that all changes, where the recent value is higher than the previous - in the first mapping rule - or lower than the previous - in the second mapping rule - are observed. If the difference is higher than defined in line six, in this example the integer value 1, a corresponding message is sent to the manager. In this example, the message includes one additional parameter. This parameter is context dependent as defined in line seven and described above in connection with Figure 3.

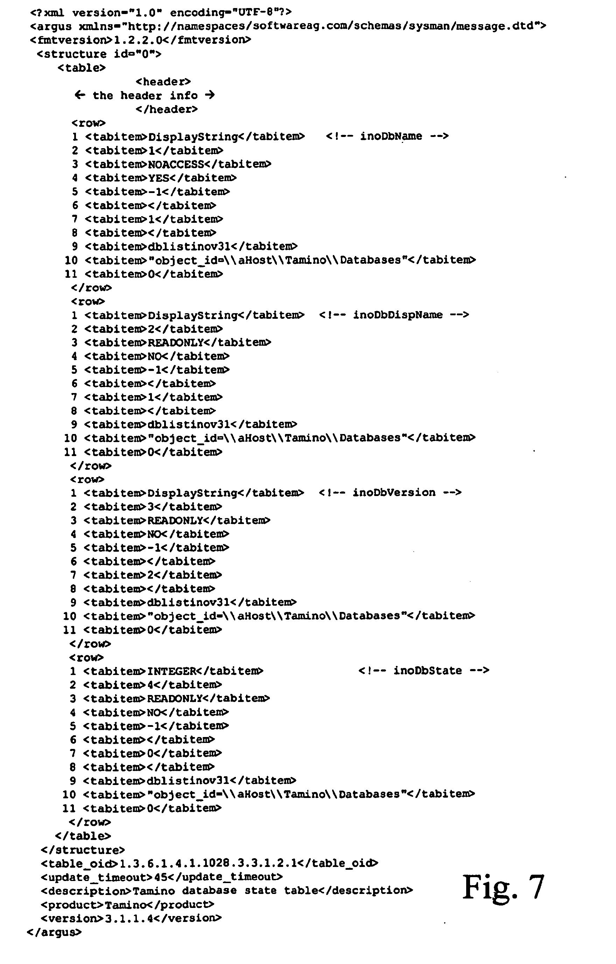

Figure 7 shows an example for a combination of collection rules, translation rules and mapping rules for a 'get' request. In this combined rule the line

```
      <description>Tamino database state table</description>
```

defines, that the object model relates to the SNMP table "Tamino data base state table". This table has the object identifier 1.3.6.1.4.1.1028.3.3.1.2.1, which is defined by line

```
        <table_oid>1.3.6.1.4.1.1028.3.3.1.2.1</table_oid>.
```

The rule applies to the managed device "Tamino" in the version "3.1.1.4", which is defined by the lines

```
                       <product>Tamino</product>
                      <version>3.1.1.4</version>.
```

In addition, the rules may comprise information when the respective request has to be sent. In one example, all rules are carried out successively and after the last rule, it is started again with the first rule. Each rule can also be assigned to a timer and each time when the timer is expired, the respective rule is carried out. Another example is that the rule is only carried out, if a certain criteria is fulfilled.

In the present example, it is defined by line

```
                 <update_timeout>45</update_timeout>
```

that the object model is updated every 45 seconds.

According to this example, the object model SNMP table has four columns, wherein each column is defined by one <row> ... </row> block. Each column includes the definition of the data type in the first line. In the example in Figure 7 the data types DisplayString and INTEGER are used. In the second line of each column definition the specific object identifier suffix is described. In each column it is also described by which requests the data can be handled. If the data is defined READONLY, only get requests can collect the data. But if the corresponding definition in the column says READWRITE get requests as well as set requests can act on this data. NOACCESS as shown in line 3 of Figure 3 is used to define an inaccessible field in terms of SNMP, corresponding to the MIB definition of the table.

In the present example, a table index is built. The fourth line defines simply by the words YES or NO whether this data should be part of the index or not. In lines five to eight the address of the value to be mapped from the intermediate format into the object model is defined. This definition can be made by the absolute position, based on the number of the row and the number of the column. Another possibility is to use the identification of the row and of the column in the respective header, wherein as identification of the row the name using the index as name identifier can be employed. Another possibility is to use a XML navigation path, like a XPath compatible description. In the present example, the address is defined, for example, by the lines

```
                          <tabitem>-1</tabitem>
                           <tabitem></tabitem>
                          <tabitem>1</tabitem>
                           <tabitem></tabitem>
```

which are used to navigate through the XML tree. The other lines of the column definition have already been described in connection with the description of Figure 3. The processing of the XML intermediate format can be implemented by using actual processing technology.

The present invention enables the manager 1 not only to receive information from the managed device 2 but also to submit information to the managed device 2, when the corresponding data is defined as READWRITE as described above. In order to change information within the managed device 2, the manager 1 submits a-corresponding request to the proxy 3 and the proxy 3 initiates the corresponding rules to carry out the requested change by using at least one utility 4 of the managed device 2.

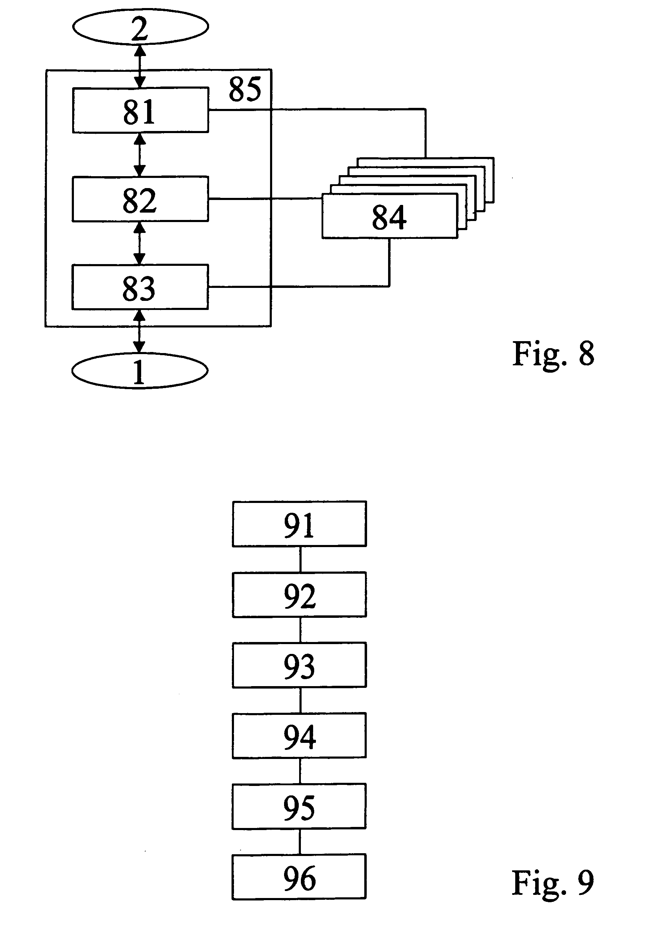

An example for an apparatus carrying out the present invention is illustrated in Figure 8. The apparatus comprises three engines, the data collection engine 81, the rendering and data analysis engine 82 and the SNMP protocol engine 83. These three engines are used to enable the communication between the manager 1 and the managed device 2.

As shown by the arrows in Figure 8, the data collection engine 81 communicates with the managed device 2 and the rendering and data analysis engine 82. The communication is bi-directional. In addition, the data collection engine 81 communicates with a data storage 84. In this data storage 84 all necessary rules are stored. The data collection engine 81 communicates with this storage 84 in order to retrieve the necessary rules, in this example the collection rules.

The rendering and data analysis engine 82 communicates with the data collection engine 81, as mentioned above, and the SNMP protocol engine 83. This communication is also a bi-directional communication. The rendering and data analysis engine 82 communicates also with the data storage 84 in order to retrieve the necessary rules, the translation rules.

The SNMP protocol engine 83 communicates with the rendering and data analysis engine 82, as mentioned above, and with the manager 1. In the present example, the communication between the SNMP protocol engine 83 and the manager 1 uses SNMP. The communication of the SNMP protocol engine 83 is also a bi-directional communication. The SNMP protocol engine retrieves the necessary mapping rules via a suitable connection from the data storage 84.

The data collection engine 81, the rendering and data analysis engine 82 and the SNMP protocol engine 83 can be part of one unit 85. This unit 85 can be called proxy, SNMP proxy in this case.

Figure 9 describes an example for a process for generating a proxy for a specific managed device 2. For this generation process the Management Information Base of the managed device 2 is necessary. In a first step 91 this Management Information Base is created depending on the utilities provided by the managed device and the needs on the manager side. In a second step 92 a corresponding intermediate format is defined. After the definition of the intermediate format, the collection rules are created 93. Based on the expected response of the collection requests, the translating rules for translating the information of the response into the intermediate format 94 are generated. In step 95 an object model is created based on the Management Information Base which has been created in step 91. In a final step 96, mapping rules for carrying out the mapping from the intermediate format into the object model are defined. In this mapping rules critical states are defined and it is defined how the corresponding status messages are generated. In addition, the conversion of the information in the response is defined in the mapping rules, if this is necessary.

Therefore, the present invention enables the first time the communication between a manager and an arbitrary managed device, without changing anything within the managed device.

## Claims

1. Method for providing a manager (1) access to data of an arbitrary managed device (2) by using at least one utility (4) of said managed device (2), wherein the method comprises the following steps:
a) sending a request to the utility (4) of said managed device (2),
b) receiving a response from said managed device (2), **characterized in that:**
c) translating at least parts of said response into an intermediate XML format (7); and
d) mapping the information in said intermediate XML format into a SNMP format applicable for said manager (1).

2. Method according to claim 1, wherein said request includes an order to get data of said managed device (2).

3. Method according to claim 2, wherein said request is defined in collection rules (6).

4. Method according to any of claims 2 or 3, wherein said response includes the requested data.

5. Method according to any of claims 1 to 4, wherein said request includes an order to set data within said managed device (2).

6. Method according to claim 5, wherein said response includes an approval, that the data has been set.

7. Method according to any of claims 1 to 6, wherein said translation step is defined in translation rules (8).

8. Method according to any of claims 1 to 7, wherein said mapping is defined in mapping rules (9).

9. Method according to any of claims 1 to 8, wherein said information in a format applicable for said manager is stored.

10. Method according to claim 9, wherein said information is submitted to said manager (1).

11. Method according to claim 10, wherein said information is submitted to said manager (1) in response to a request by said manager (1).

12. Method according to any of claims 1 to 11, wherein a message is transmitted to said manager (1), if said information in a format applicable for said manager fulfills a certain criteria.

13. Proxy (3) for providing a manager (1) access to data of an arbitrary managed device (2) by using at least one utility (4) of the managed device (2), wherein the proxy (3) comprises the following units:
a) a sending unit (5) for sending a request to a utility (4) of said managed device (2),
b) a receiving unit (5) for receiving a response from said managed device (2), **characterized in that:**
c) the proxy (3) further comprises a translating unit translating at least parts of said response into an intermediate XML format (7); and
d) a mapping unit for mapping the information in said intermediate XML format into a SNMP format applicable for said manager (1).

14. Proxy (3) according to claim 13, wherein said proxy (3) is capable and dedicated to process requests which include at least one order to get data from said managed device (2).

15. Proxy (3) according to claim 14, wherein said proxy (3) is capable and dedicated to define requests based on collection rules (6).

16. Proxy (3) according to any of claims 14 or 15, wherein said proxy (3) is capable and dedicated to process responses which include the requested data.

17. Proxy (3) according to any of claims 15 to 16, wherein said proxy (3) is capable and dedicated to process requests which include at least one order to set data within said managed device (2).

18. Proxy (3) according to claim 17, wherein said proxy (3) is capable and dedicated to process responses which include an approval that said data has been set.

19. Proxy (3) according to claim 18, wherein said proxy (3) is capable and dedicated to carry out the translations based on translation rules (8).

20. Proxy (3) according to any of claims 13 to 19, wherein said proxy (3) is capable and dedicated to carry out mapping based on mapping rules (9).

21. Proxy (3) according to any of claims 13 to 20, wherein said proxy (3) is capable and dedicated to store said information in a format applicable for said manager.

22. Proxy (3) according to claim 21, wherein said proxy (3) is capable and dedicated to submit said information to said manager (1).

23. Proxy (3) according to claim 22, wherein said proxy (3) is capable and dedicated to submit said information submitted to said manager (1) in response to a request by said manager (1).

24. Proxy (3) according to any of claims 13 to 23, wherein said proxy (3) is capable and dedicated to transmit a message to said manager (1), if said information in a format applicable for said manager fulfills a certain criteria.

25. A computer system for performing all the steps of the method according to one of the preceding claims 1 - 12.

26. Storage medium having a program code for carrying out all the steps of the method according to one of the preceding claims 1 - 12.

27. System comprising at least one manager (1) and at least one managed device (2), wherein said at least one manager (1) and said at least on managed device (2) communicate with all the steps of a method according to one of the preceding claims 1 - 12.

## Patentansprüche

1. Verfahren, um einem Verwalter (1) Zugriff auf Daten eines beliebigen verwalteten Geräts (2) durch Nutzung zumindest eines Dienstprogramms (4) des verwalteten Geräts (2) bereitzustellen, wobei das Verfahren die folgenden Schritte aufweist:
a) Senden einer Anfrage an das Dienstprogramm (4) des verwalteten Geräts (2),
b) Empfangen einer Antwort vom verwalteten Gerät (2), **gekennzeichnet durch:**
c) Übersetzen zumindest von Teilen der Antwort in ein Zwischen-XML-Format (7); und
d) Abbilden der Information im Zwischen-XML-Format in ein für den Verwalter (1) anwendbares SNMP-Format.

2. Verfahren nach Anspruch 1, wobei die Anfrage eine Anforderung zum Beziehen von Daten des verwalteten Geräts (2) enthält.

3. Verfahren nach Anspruch 2, wobei die Anfrage in Sammlungsregeln (6) definiert ist.

4. Verfahren nach einem der Ansprüche 2 oder 3, wobei die Antwort die angefragten Daten enthält.

5. Verfahren nach einem der Ansprüche 1 - 4, wobei die Anfrage eine Anforderung zum Setzen von Daten im verwalteten Gerät (2) enthält.

6. Verfahren nach Anspruch 5, wobei die Antwort eine Bestätigung enthält, dass die Daten gesetzt wurden.

7. Verfahren nach einem der Ansprüche 1 - 6, wobei der Übersetzungsschritt in Übersetzungsregeln (8) definiert ist.

8. Verfahren nach einem der Ansprüche 1 - 7, wobei die Abbildung in Abbildungsregeln (9) definiert ist.

9. Verfahren nach einem der Ansprüche 1 - 8, wobei die Information, die in einem für den Verwalter anwendbaren Format ist, gespeichert wird.

10. Verfahren nach Anspruch 9, wobei die Information zum Verwalter (1) übermittelt wird.

11. Verfahren nach Anspruch 10, wobei die Information zum Verwalter (1) in Antwort auf eine Anfrage des Verwalters (1) übermittelt wird.

12. Verfahren nach einem der Ansprüche 1 - 11, wobei eine Nachricht zum Verwalter (1) übermittelt wird, falls die Information, die in einem für den Verwalter anwendbaren Format ist, ein gewisses Kriterium erfüllt.

13. Proxy (3), um einem Verwalter (1) Zugriff auf Daten eines beliebigen verwalteten Geräts (2) durch Nutzung zumindest eines Dienstprogramms (4) des verwalteten Geräts (2) bereitzustellen, wobei der Proxy (3) die folgenden Einheiten aufweist:
a) eine Sendeeinheit (5) zum Senden einer Anfrage an ein Dienstprogramm (4) des verwalteten Geräts (2),
b) eine Empfangseinheit (5) zum Empfangen einer Antwort vom verwalteten Gerät (2), **dadurch gekennzeichnet, dass:**
c) der Proxy (3) ferner eine Übersetzungseinheit aufweist, die zumindest Teile der Antwort in ein Zwischen-XML-Format (7) übersetzt; und
d) eine Abbildungseinheit zum Abbilden der Information im Zwischen-XML-Format in ein für den Verwalter (1) anwendbares SNMP-Format.

14. Proxy (3) nach Anspruch 13, wobei der Proxy (3) geeignet und zugeordnet ist um Anfragen zu verarbeiten, die zumindest eine Anforderung zum Beziehen von Daten vom verwalteten Gerät (2) enthalten.

15. Proxy (3) nach Anspruch 14, wobei der Proxy (3) geeignet und zugeordnet ist um Anfragen basierend auf Sammlungsregeln (6) zu definieren.

16. Proxy (3) nach einem der Ansprüche 14 oder 15, wobei der Proxy (3) geeignet und zugeordnet ist um Antworten zu verarbeiten, die die angefragten Daten enthalten.

17. Proxy (3) nach einem der Ansprüche 15 - 16 wobei der Proxy (3) geeignet und zugeordnet ist um Anfragen zu verarbeiten, die zumindest eine Anforderung zum Setzen von Daten im verwalteten Gerät (2) enthalten.

18. Proxy (3) nach Anspruch 17, wobei der Proxy (3) geeignet und zugeordnet ist um Antworten zu verarbeiten, die eine Bestätigung enthalten, dass die Daten gesetzt wurden.

19. Proxy (3) nach Anspruch 18, wobei der Proxy (3) geeignet und zugeordnet ist um die Übersetzungen basierend auf Übersetzungsregeln (8) durchzuführen.

20. Proxy (3) nach einem der Ansprüche 13 - 19, wobei der Proxy (3) geeignet und zugeordnet ist um Abbildungen basierend auf Abbildungsregeln (9) durchzuführen.

21. Proxy (3) nach einem der Ansprüche 13 - 20, wobei der Proxy (3) geeignet und zugeordnet ist um die Information in einem für den Verwalter anwendbaren Format abzuspeichern.

22. Proxy (3) nach Anspruch 21, wobei der Proxy (3) geeignet und zugeordnet ist um die Informationen zum Verwalter (1) zu übermitteln.

23. Proxy (3) nach Anspruch 22, wobei der Proxy (3) geeignet und zugeordnet ist um die zum Verwalter (1) übermittelte Information in Antwort auf eine Anfrage des Verwalters (1) zu übermitteln.

24. Proxy (3) nach einem der Ansprüche 13 - 23, wobei der Proxy (3) geeignet und zugeordnet ist um eine Nachricht zum Verwalter (1) zu übermitteln, falls die Information, die in einem für den Verwalter anwendbaren Format ist, ein gewisses Kriterium erfüllt.

25. Ein Computersystem zum Durchführen aller Schritte des Verfahrens nach einem der vorangehenden Ansprüche 1 - 12.

26. Speichermedium mit Programmcode zum Durchführen aller Schritte des Verfahrens nach einem der vorangehenden Ansprüche 1 - 12.

27. System, das zumindest einen Verwalter (1) und zumindest ein verwaltetes Gerät (2) aufweist, wobei der zumindest eine Verwalter (1) und das zumindest eine verwaltete Gerät (2) mit allen Schritten eines Verfahrens nach einem der vorangehenden Ansprüche 1 - 12 kommunizieren.

## Revendications

1. Un procédé pour assurer à un gestionnaire (1) un accès à des données d'un dispositif géré arbitraire (2) en utilisant au moins un utilitaire (4) dudit dispositif géré (2), dans lequel le procédé comprend les étapes suivantes :
a) l'envoi d'une requête à l'utilitaire (4) dudit dispositif géré (2),
b) la réception d'une réponse depuis ledit dispositif géré (2), **caractérisé par** :
c) la traduction d'au moins des parties de ladite réponse en un format XML intermédiaire (7) ; et
d) le mappage des informations dans ledit format XML intermédiaire vers un format SNMP applicable audit gestionnaire (1).

2. Procédé selon la revendication 1, dans lequel ladite requête inclut un ordre d'obtenir des données dudit dispositif géré (2).

3. Procédé selon la revendication 2, dans lequel ladite requête est définie dans des règles de recueil (6).

4. Procédé selon l'une des revendications 2 ou 3, dans lequel ladite réponse inclut les données requises.

5. Procédé selon l'une des revendications 1 à 4, dans lequel ladite requête comprend un ordre de placer des données au sein dudit dispositif géré (2).

6. Procédé selon la revendication 5, dans lequel ladite réponse inclut une approbation de ce que les données ont été placées.

7. Procédé selon l'une des revendications 1 à 6, dans lequel ladite étape de traduction est définie dans des règles de traduction (8).

8. Procédé selon l'une des revendications 1 à 7, dans lequel ledit mappage est défini par des règles de mappage (9).

9. Procédé selon l'une des revendications 1 à 8, dans lequel on mémorise ladite information en un format applicable audit gestionnaire.

10. Procédé selon la revendication 9, dans lequel ladite information est soumise audit gestionnaire (1).

11. Procédé selon la revendication 10, dans lequel ladite information est soumise audit gestionnaire (1) en réponse à une requête par ledit gestionnaire (1).

12. Procédé selon l'une des revendications 1 à 11, dans lequel un message est émis vers ledit gestionnaire (1), si ladite information dans un format applicable audit gestionnaire répond à un certain critère.

13. Serveur mandataire (3) pour assurer à un gestionnaire (1) un accès à des données d'un dispositif géré arbitraire (2) en utilisant au moins un utilitaire (4) du dispositif géré (2), dans lequel le serveur mandataire (3) comprend les unités suivantes :
a) une unité d'envoi (5) pour envoyer une requête à un utilitaire (4) dudit dispositif géré (2),
b) une unité de réception (5) pour recevoir une réponse depuis ledit dispositif géré (2), **caractérisé en ce que :**
c) le serveur mandataire (3) comprend en outre une unité de traduction pour la traduction d'au moins des parties de ladite réponse en un format XML intermédiaire (7) ; et
d) une unité de mappage pour le mappage de l'information dans ledit format XML intermédiaire vers un format SNMP applicable audit gestionnaire (1).

14. Serveur mandataire (3) selon la revendication 13, dans lequel ledit serveur mandataire (3) est apte et dédié au traitement de requêtes qui incluent au moins un ordre d'obtenir des données depuis ledit dispositif géré (2).

15. Serveur mandataire (3) selon la revendication 14, dans lequel ledit serveur mandataire (3) est apte et dédié à définir des requêtes basées sur des règles de recueil (6).

16. Serveur mandataire (3) selon l'une des revendications 14 ou 15, dans lequel ledit serveur mandataire est apte et dédié à traiter des réponses qui incluent les données requises.

17. Serveur mandataire (3) selon l'une des revendications 15 à 16, dans lequel ledit serveur mandataire (3) est apte et dédié à traiter des requêtes qui incluent au moins un ordre de placer des données au sein dudit dispositif géré (2).

18. Serveur mandataire (3) selon la revendication 17, dans lequel ledit serveur mandataire (3) est apte et dédié à traiter des réponses qui incluent une approbation que lesdites données ont été placées.

19. Serveur mandataire (3) selon la revendication 18, dans lequel ledit serveur mandataire (3) est apte et dédié à effectuer les traductions sur la base de règles de traduction (8).

20. Serveur mandataire (3) selon l'une des revendications 13 à 19, dans lequel ledit serveur mandataire (3) est apte et dédié à effectuer un mappage sur la base de règles de mappage (9).

21. Serveur mandataire (3) selon l'une des revendications 13 à 20, dans lequel ledit serveur mandataire (3) est apte et dédié à mémoriser ladite information dans un format applicable audit gestionnaire.

22. Serveur mandataire (3) selon la revendication 21, dans lequel ledit serveur mandataire (3) est apte et dédié à soumettre ladite information audit gestionnaire (1).

23. Serveur mandataire (3) selon la revendication 22, dans lequel ledit serveur mandataire (3) est apte et dédié à soumettre ladite information soumise audit gestionnaire (1) en réponse à une requête par ledit gestionnaire (1).

24. Serveur mandataire (3) selon l'une des revendications 13 à 23, dans lequel ledit serveur mandataire (3) est apte et dédié à émettre un message vers ledit gestionnaire (1), si ladite information en un format applicable audit gestionnaire répond à un certain critère.

25. Un système informatique pour exécuter toutes les étapes du procédé selon l'une des revendications précédentes 1 à 12.

26. Support de stockage avec un code de programme pour exécuter toutes les étapes du procédé selon l'une des revendications précédentes 1 à 12.

27. Système comprenant au moins un gestionnaire (1) et au moins un dispositif géré (2), dans lequel ledit au moins un gestionnaire et ledit au moins un dispositif géré (2) communiquent par toutes les étapes d'un procédé selon l'une des revendications précédentes 1 à 12.
